# EUROPÄISCHE PATENTSCHRIFT

(11) **EP 3 199 926 B1**
(45) Veröffentlichungstag und Bekanntmachung des Hinweises auf die Patenterteilung: **29.06.2022**
(21) Anmeldenummer: 17150132.3
(22) Anmeldetag: 03.01.2017
(51) Int. Cl.: G01F 23/28, G01F 23/284, G01F 23/2962, G01S 13/88, G01S 15/02, G01S 13/34, G01S 15/34, G01S 15/88

(54) **VERFAHREN ZUM BETREIBEN EINES BERÜHRUNGSLOS ARBEITENDEN ULTRASCHALL- ODER RADAR-FÜLLSTANDMESSGERÄTS**
METHOD FOR OPERATING A CONTACTLESS ULTRASONIC OR RADAR FILLING LEVEL MEASURING DEVICE
PROCÉDÉ DE FONCTIONNEMENT D'UN APPAREIL DE MESURE DE NIVEAU PAR RADAR OU PAR ULTRASONS FONCTIONNANT SANS CONTACT

(30) Priorität: 15.01.2016 DE 102016100674
(43) Veröffentlichungstag der Anmeldung: 02.08.2017
(73) Patentinhaber: Krohne Messtechnik GmbH, 47058 Duisburg (DE)
(72) Erfinder: Gerding, Michael, 44805 Bochum (DE)
(74) Vertreter: Gesthuysen Patentanwälte

(56) Entgegenhaltungen:
- DE-A1- 2 649 075
- DE-A1- 3 812 293
- US-A- 4 951 056
- US-A- 5 811 688

## Beschreibung

Die vorliegende Erfindung betrifft ein Verfahren zum Betreiben eines berührungslos arbeitenden Ultraschall- oder Radar-Füllstandmessgeräts mit wenigstens einem freistrahlenden Sender, wenigstens einem Empfänger und wenigstens einer Auswerteeinheit umfassend die folgenden Schritte: Aussenden eines Sendesignals durch den Sender, Empfangen eines an einem Reflektor reflektierten Reflexionssignals durch den Empfänger, Auswerten des Sendesignals und/oder des Reflexionssignals durch die Auswerteeinheit. Darüber hinaus betrifft die Erfindung ein berührungslos arbeitendes Ultraschall- oder Radar-Füllstandmessgerät umfassend wenigstens einen freistrahlenden Sender für die Aussendung eines Sendesignals, wenigstens einen Empfänger für den Empfang eines an einem Reflektor reflektierten Reflexionssignals und wenigstens eine Auswerteeinheit, wobei die Auswerteeinheit zur Auswertung des Sende- und/oder Reflexionssignals ausgestaltet ist.

Berührungslos arbeitende Füllstandmessgeräte für die Messung des Füllstandes von in einem Behälter angeordnetem Füllgut sowie Verfahren zum Betreiben dieser Geräte sind aus dem Stand der Technik bekannt. Ein bekanntes Messprinzip, welches der Bestimmung des Füllstandes zugrunde liegt, ist das Laufzeitverfahren. Dabei wird während eines Messzyklus von einem Sender ein Ultraschall- oder Radarsignal in Richtung des Füllgutes ausgesendet und nach der Reflexion an der Füllgutoberfläche von einem Empfänger als Reflexionssignal empfangen. Die Laufzeit des Reflexionssignals ist abhängig von der zurückgelegten Wegstrecke. Insofern kann aus der Laufzeit der Abstand zur Füllgutoberfläche und daraus der Füllstand im Behälter bestimmt werden.

Problematisch bei diesem Messprinzip ist, dass das Sendesignal nicht ausschließlich an der Füllgutoberfläche, sondern vielmehr auch an sogenannten statischen Störern, wie Behältereinbauten, Schweißnähten oder am Behälterboden reflektiert wird. Ein von dem Empfänger detektiertes Reflexionssignal ist folglich eine Überlagerung von einzelnen Reflexionen an unterschiedlichen Reflektoren. Aufgrund ihrer unterschiedlichen Laufzeit können die einzelnen Reflexionssignale differenziert werden. Durch die Aufnahme des Reflexionssignals eines leeren Behälters ist es insbesondere möglich, die Anteile, die durch Reflexionen an statischen Störquellen verursacht werden, während der Füllstandmessung aus dem Reflexionssignal herauszufiltern.

Neben statischen Störern können aber auch dynamische Störquellen den Messprozess beeinflussen.

Dynamische Störungen treten beispielsweise auf, wenn während des Befüllvorgangs des Behälters das Füllgut das Sendesignal durchläuft. Zwar ist es möglich, dass das Sendesignal zumindest teilweise durch das einströmende Medium hindurchdringt, eine sichere Messung des Füllstandes ist jedoch nicht gegeben. Um eine zuverlässige Füllstandmessung zu gewährleisten, müssen daher ebenfalls dynamische Störungen bei der Auswertung des Reflexionssignals berücksichtigt werden.

Die Druckschrift DE 38 12 293 A1 offenbart ein Füllstandmessgerät bei dem alle Empfangssignale, deren Frequenz nicht der Sendefrequenz entspricht, von der Digitalisierung und weiteren Signalverarbeitung ausgeschlossen werden. Hierzu gehören infolge der Doppler-Frequenzverschiebung Empfangssignale, die durch Reflexionen an beweglichen Hindernissen, wie dem Befüllstrom, verursacht werden. Ein aus der Druckschrift DE 26 49 075 A1 bekanntes Verfahren verwendet ebenfalls den Dopplereffekt, um ein von einer Füllgutoberfläche zurückkehrendes Nutzecho von Störechos zu unterscheiden.

Derzeit werden bei Füllstandmessungen dynamische Störquellen insbesondere dadurch berücksichtigt, dass die ermittelten Füllstandmesswerte einer Plausibilitätskontrolle unterzogen werden, bevor sie ausgegeben werden. Dazu wird beispielsweise ausgehend von dem aktuellen Füllstand abhängig von der zu erwartenden Änderung der Füllstandhöhe ein Fenster bestimmt, innerhalb dessen Füllstandmesswerte plausibel sind. Liegt ein ermittelter Füllstandmesswert außerhalb dieses Fensters, wird er als unplausibel verworfen.

Die Druckschrift DE 10 2013 103 532 A1 offenbart ein Verfahren zur Messung des Füllstandes eines Füllgutes in einem Behälter, wobei anhand von historischen und aktuellen Messpunkten eine Plausibilitätskontrolle vorgenommen wird und aufgrund der Plausibilitätskontrolle als unplausibel erkannte historische und/oder aktuelle Messpunkte gelöscht werden. Eine weitere Auswertung der gelöschten Messwerte findet nicht statt. Es findet insbesondere keine Zuordnung der als unplausibel eingestuften Messwerte zu einer entsprechenden Störquelle statt.

Nachteilig an diesem Verfahren ist, dass zum einen keine Zuordnung des Fehlersignals zu einer Störquelle stattfindet, sodass eine Beseitigung und/oder Berücksichtigung der Störung bei der Ausgabe des Füllstandes nicht möglich ist. Zum anderen wird ein Füllstrom, welcher einen geringen Abstand zur Füllgutoberfläche aufweist, welcher insbesondere innerhalb des Plausibilitätsfensters verläuft, nicht als Messfehler erkannt.

Ausgehend von diesem Stand der Technik liegt der vorliegenden Erfindung die Aufgabe zugrunde, ein Verfahren zum Betreiben eines berührungslos arbeitenden Ultraschall- oder Radar-Füllstandmessgeräts und ein berührungslos arbeitendes Ultraschall- oder Radar-Füllstandmessgerät anzugeben, das eine besonders hohe Zuverlässigkeit der Füllstandmessung bereitstellt.

Gemäß einer ersten Lehre der vorliegenden Erfindung ist die Aufgabe bei dem eingangs genannten Verfahren dadurch gelöst, dass die Auswerteeinheit eine Frequenzverschiebung zwischen dem Sendesignal und dem Reflexionssignal ermittelt und durch Auswertung der ermittelten Frequenzverschiebung oder einer von der ermittelten Frequenzverschiebung abgeleiteten Größe einen Befüllvorgang detektiert, bei dem ein Füllstrom das Sendesignal zumindest teilweise durchläuft.

Es wurde erkannt, dass es möglich ist, auch dynamische Störquellen, vorliegend den Befüllvorgang, zu identifizieren, sodass eine Berücksichtigung dieser Störquelle bei der Füllstandmessung möglich ist. Erfindungsgemäß wird dazu der Effekt der Frequenzverschiebung des Reflexionssignals zwischen einem sich bewegendem Reflektor und dem Empfänger ausgenutzt. Sofern der Füllstrom das Sendesignal zumindest teilweise durchläuft, wird das Sendesignal zumindest teilweise an dem Füllstrom reflektiert, wodurch der Befüllvorgang erkannt und detektiert wird.

Die erfindungsgemäße Detektion des Befüllvorgangs aufgrund der Frequenzverschiebung zwischen dem Sendesignal und dem Reflexionssignal hat den weiteren Vorteil, dass auch wenn der Füllstrom das Sendesignal nur teilweise oder auch nahe der Füllgutoberfläche durchläuft, der Befüllvorgang erkannt wird, da die ermittelte Frequenzverschiebung unabhängig von dem Abstand des Reflektors zur Füllgutoberfläche ist. Wird die Detektion eines Befüllvorgangs bei der Füllstandmessung, insbesondere bei der Auswertung und/oder Ausgabe des gemessenen Füllstands berücksichtigt, kann die Angabe von fehlerhaften und/oder unsicheren Füllstandmesswerten vermieden werden und die Zuverlässigkeit einer solchen Füllstandmessung wird insofern erhöht.

Gemäß einer ersten Ausgestaltung des erfindungsgemäßen Verfahrens bestimmt die Auswerteeinheit aus der ermittelten Frequenzverschiebung die Reflektorgeschwindigkeit und detektiert den Befüllvorgang durch einen Vergleich der Reflektorgeschwindigkeit mit einem festgelegten Geschwindigkeitsgrenzwert. Dabei wurde erkannt, dass sich die Partikel des Füllstroms mit einer anderen Geschwindigkeit, insbesondere mit einer höheren Geschwindigkeit bewegen, als Partikel der Füllgutoberfläche. Die ermittelte Frequenzverschiebung ist umso höher, je größer die Geschwindigkeitskomponente der Partikel des Füllstroms parallel zur Ausbreitungsrichtung des Sendesignals ist. Durch den Vergleich mit einem Geschwindigkeitsgrenzwert wird erkannt, ob der Reflektor einem sich schnell bewegenden Füllstrom angehört. Dabei wird ein Befüllstrom detektiert, wenn die Reflektorgeschwindigkeit größer als der Geschwindigkeitsgrenzwert ist. Durch die Zuordnung zum Füllstrom aufgrund der Geschwindigkeit des Reflektors kann eine eindeutige Zuordnung bis zu dem Zeitpunkt, zu dem der Reflektor auf die Füllgutoberfläche auftrifft, gewährleistet werden. Denn erst dann reduziert sich seine Geschwindigkeit auf die Geschwindigkeit der Füllgutoberfläche.

Die Zuordnung zum Befüllvorgang aufgrund der Geschwindigkeit des Reflektors, und zwar insbesondere aufgrund der Geschwindigkeitskomponente parallel zur Ausbreitungsrichtung des Sendesignals, ist insbesondere vorteilhaft bei der Füllstandmessung sich bewegender Oberflächen. Zwar weisen Partikel sich bewegender Oberflächen im Gegensatz zu ruhendem Füllgut eine erhöhte Geschwindigkeit auf. Allerdings ist die Geschwindigkeitskomponente in Ausbreitungsrichtung des Sendesignals nach wie vor klein im Vergleich zu der Geschwindigkeit von Partikeln, welche im Füllstrom angeordnet sind. Insofern stellt die zuvor dargelegte Ausgestaltung insbesondere im Fall von bewegten Oberflächen ein besonders zuverlässiges Verfahren zum Betreiben eines berührungslos arbeitenden Ultraschall- oder Radar-Füllstandmessgeräts bereit.

Der Geschwindigkeitsgrenzwert kann ein vor der Inbetriebnahme des Füllstandmessgeräts festgelegter Wert sein. Alternativ kann der Geschwindigkeitsgrenzwert aber auch abhängig von der maximalen Geschwindigkeit der Füllgutoberfläche und insofern abhängig vom Füllgut festgelegt werden. Dabei ist die Geschwindigkeit der Füllgutoberfläche insbesondere abhängig von der Partikelgröße und der Art des Füllgutes.

Gemäß einer weiteren besonders bevorzugten Ausgestaltung ermittelt die Auswerteeinheit nach, vor oder während der Detektion des Befüllvorgangs die Laufzeit des Reflexionssignals und bestimmt aus der ermittelten Laufzeit den Füllstand. In vorteilhafter Weise kann gemäß dieser Ausgestaltung ein Verfahren bereitgestellt werden, das eine im Wesentlichen zeitgleiche Bestimmung des Füllstandes und der Detektion des Befüllvorgangs erlaubt. Besonders vorteilhaft ist es, wenn die Bestimmung des Füllstandes und die Detektion des Befüllvorgangs durch die Auswertung desselben Reflexionssignals erfolgen. Die Detektion des Befüllvorgangs kann dann während einer Füllstandmessung auf besonders einfache und schnelle Weise erfolgen.

Ebenfalls bevorzugt ist es, wenn die Auswerteeinheit den detektierten Befüllvorgang und den Füllstandmesswert ausgibt, wobei der Füllstandmesswert als unsicher gekennzeichnet wird, wenn die Auswerteeinheit einen Befüllvorgang detektiert. Durch ein Verfahren gemäß dieser Ausgestaltung wird dem Nutzer ein besonders hoher Grad an Information bereitgestellt. Zum einen wird mitgeteilt, dass ein Befüllvorgang detektiert wird, wodurch ebenfalls mitgeteilt wird, dass das Füllstandmessgerät aktuell über dem Befüllstrom angeordnet ist. Dies ist insbesondere dann relevant, wenn der Behälter alternativ oder gleichzeitig mit unterschiedlichem Füllgut befüllt wird. Denn dann ist das Verhalten des Füllgutes während des Befüllvorgangs, insbesondere die räumliche Ausbreitung des Füllstroms oberhalb der Füllgutoberfläche unterschiedlich, sodass die Situation auftreten kann, dass ein erstes Füllgut das Sendesignal während des Befüllvorgangs durchläuft, während ein zweites Füllgut das Sendesignal während des Befüllvorgangs nicht durchläuft. Zum anderen weist die Kennzeichnung der ausgegebenen Füllstandmesswerte als unsicher den Vorteil auf, dass die Ausgabe von falschen und/oder nicht gekennzeichneten unsicheren Füllstandmesswerten vermieden wird. Insofern wird die Zuverlässigkeit der Füllstandmessung durch die zuvor beschriebene Ausgestaltung des erfindungsgemäßen Verfahrens weiter erhöht.

Gemäß einer weiteren Ausgestaltung wird die Füllstandmessung unterbrochen, wenn die Auswerteeinheit einen Befüllvorgang detektiert. Die Ausgabe von falschen oder zumindest unsicheren Messwerten kann auf diese Weise ebenfalls vermieden werden, wodurch die Zuverlässigkeit der Füllstandmessung weiter erhöht wird. Vorzugsweise wird die Füllstandmessung automatisch aufgenommen und/oder fortgesetzt, wenn die Auswerteeinheit keinen Befüllvorgang detektiert.

Gemäß einer zweiten Lehre der vorliegenden Erfindung wird die Aufgabe durch ein eingangs genanntes berührungslos arbeitendes Ultraschall- oder Radar-Füllstandmessgerät dadurch gelöst, dass die Auswerteeinheit im Betriebszustand dazu geeignet ist, eine Frequenzverschiebung zwischen dem Sendesignal und dem Reflexionssignal zu ermitteln und durch Auswertung der ermittelten Frequenzverschiebung oder einer von der ermittelten Frequenzverschiebung abgeleiteten Größe einen Befüllvorgang zu detektieren, bei dem ein Füllstrom das Sendesignal zumindest teilweise durchläuft. Mithilfe eines erfindungsgemäßen Füllstandmessgerätes wird in vorteilhafter Weise eine dynamische Störquelle, nämlich der Befüllvorgang erkannt, wenn der Füllstrom das Sendesignal zumindest teilweise durchläuft.

Die Auswerteeinheit ist vorzugsweise ebenfalls dazu geeignet, den Füllstand zu ermitteln. Berücksichtigt die Auswerteeinheit die Detektion eines Befüllvorgangs bei der Füllstandmessung, insbesondere bei der Auswertung und/oder der Ausgabe des Füllstandes, wird die Zuverlässigkeit des Messprozesses deutlich erhöht.

Besonders bevorzugt ist es, wenn die Auswerteeinheit im Betriebszustand dazu geeignet ist, aus der ermittelten Frequenzverschiebung die Reflektorgeschwindigkeit zu bestimmen und den Befüllvorgang durch einen Vergleich der Reflektorgeschwindigkeit mit einem festgelegten Geschwindigkeitsgrenzwert zu detektieren. Vorzugsweise wird ein Befüllvorgang detektiert, wenn die Reflektorgeschwindigkeit größer als der Geschwindigkeitsgrenzwert ist. Wie bereits dargelegt, kann durch die Zuordnung zum Füllstrom aufgrund der Geschwindigkeit des Reflektors eine eindeutige Zuordnung bis zu dem Zeitpunkt, zu dem der Reflektor auf die Füllgutoberfläche auftrifft, gewährleistet werden. Der Geschwindigkeitsgrenzwert kann ein vor Inbetriebnahme des Füllstandmessgeräts festgelegter Wert sein. In bevorzugter Weise wird der Geschwindigkeitsgrenzwert abhängig von der maximalen Geschwindigkeit der Füllgutoberfläche und insofern abhängig vom Füllgut festgelegt.

Weiterhin ist es vorteilhaft, wenn die Auswerteeinheit im Betriebszustand dazu geeignet ist, nach, vor oder während der Detektion des Befüllvorgangs die Laufzeit des Reflexionssignals zu ermitteln und aus der ermittelten Laufzeit den Füllstand zu bestimmen. Besonders bevorzugt ist es, wenn die Bestimmung des Füllstandes und die Detektion des Befüllvorgangs durch die Auswertung desselben Reflexionssignals erfolgen. Dann ist ein zuverlässiges Füllstandmessgerät, das den Befüllvorgang erkennt und berücksichtigt, besonders einfach ausgestaltet.

Dabei ist es vorteilhaft, wenn die Auswerteeinheit im Betriebszustand dazu geeignet ist, den detektierten Befüllstand und den Füllstandmesswert auszugeben, wobei der Füllstandmesswert als unsicher gekennzeichnet wird, wenn die Auswerteeinheit einen Befüllvorgang detektiert.

In vorteilhafter Weise kann dann die Anordnung des Füllstandmessgeräts an dem Behälter von der Information, ob Füllgut das Sendesignal während des Befüllvorgangs zumindest teilweise durchläuft, abhängig gemacht werden. Da ein Füllstandmessgerät gemäß der zuvor beschriebenen Ausgestaltung den Befüllvorgang erkennt und auch berücksichtigt, ist es insbesondere möglich, das Füllstandmessgerät über dem Füllstrom zu positionieren, ohne fehlerhafte Füllstandmesswerte in Kauf nehmen zu müssen.

Alternativ oder zusätzlich zu der zuvor beschriebenen Ausgestaltung ist es vorteilhaft, wenn die Auswerteeinheit im Betriebszustand dazu geeignet ist, die Füllstandmessung zu unterbrechen. Auf diese Weise wird ebenfalls die Ausgabe falscher oder unsicherer Füllstandmesswerte vermieden. Vorzugsweise ist die Auswerteeinheit derart ausgestaltet, dass die Füllstandmessung automatisch aufgenommen und/oder fortgesetzt wird, wenn die Auswerteeinheit keinen Befüllvorgang detektiert.

Ein Füllstandmessgerät gemäß der zuvor beschriebenen Ausgestaltung kann insofern in vorteilhafter Weise zwischen dem Messbetrieb zur Messung des Füllstandes und der Befüllung unterscheiden.

Im Einzelnen gibt es nun eine Vielzahl von Möglichkeiten, das erfindungsgemäße Verfahren zum Betreiben eines berührungslos arbeitenden Ultraschall- oder Radar-Füllstandmessgeräts und das erfindungsgemäße berührungslos arbeitende Ultraschall- oder Radar-Füllstandmessgerät auszugestalten. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig.1: eine Situation des Befüllvorgangs eines Behälters, wobei ein Ausführungsbeispiel eines erfindungsgemäßen Füllstandmessgerätes, welches ein erstes Ausführungsbeispiel des erfindungsgemäßen Verfahrens realisiert, an einem Behälter an geordnet ist und
- Fig. 2: ein zweites Ausführungsbeispiel eines erfindungsgemäßen Verfahrens.

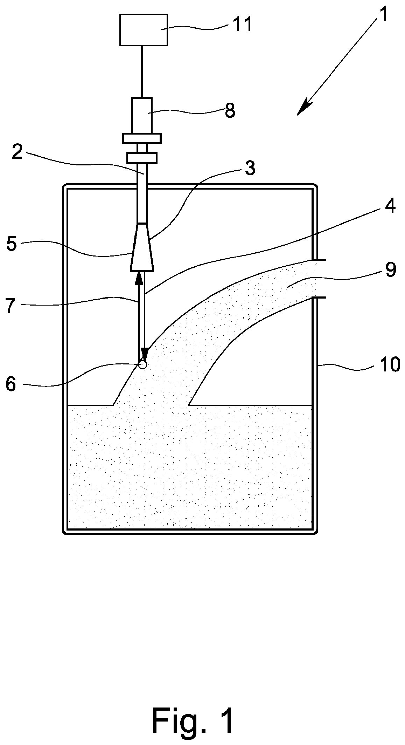

In Fig. 1 ist dargestellt ein Verfahren 1 zum Betreiben eines berührungslos arbeitenden Ultraschall- oder Radar-Füllstandmessgeräts 2, sowie ein berührungslos arbeitendes Ultraschall- oder Radar-Füllstandmessgerät 2 im Betrieb. Das Verfahren 1 und das Füllstandmessgerät 2 zeichnen sich jeweils dadurch aus, dass ein freistrahlender Sender 3 vorgesehen ist, der ein Sendesignal 4 aussendet, dass ein Empfänger 5 vorgesehen ist, der das an einem Reflektor 6 reflektierte Reflexionssignal 7 empfängt, und dass eine Auswerteeinheit 8 vorgesehen ist, die das Sendesignal 4 und/oder das Reflexionssignal 7 auswertet, wobei die Auswerteeinheit 8 eine Frequenzverschiebung zwischen dem Sendesignal 4 und dem Reflexionssignal 7 ermittelt und durch Auswertung der ermittelten Frequenzverschiebung oder einer von der ermittelten Frequenzverschiebung abgeleiteten Größe einen Befüllvorgang detektiert, bei dem ein Füllstrom 9 das Sendesignal 4 zumindest teilweise durchläuft.

Fig. 1 zeigt im Detail die Situation des Befüllvorgangs eines Behälters 10, wobei Füllgut in Form eines Füllstroms 9 seitlich in den Behälter 10 gefüllt wird. Der Füllstrom 9 durchläuft das von dem Sender 3 des Füllstandmessgerätes 2 ausgesendete Sendesignal 4, wodurch der Befüllvorgang von der Auswerteeinheit 8 detektiert wird.

Durch die Detektion des Befüllvorgangs mithilfe des dargestellten Verfahrens 1 und des Füllstandmessgeräts 2 wird eine besonders zuverlässige Füllstandmessung bereitgestellt.

Die folgenden Ausführungen beziehen sich sowohl auf das Ausführungsbeispiel des Verfahrens 1 zum Betreiben eines berührungslos arbeitenden Ultraschall- oder Radar-Füllstandmessgeräts 2 sowie auf das dargestellte Füllstandmessgerät 2.

Die Auswerteeinheit 8 des Füllstandmessgeräts 2 bestimmt in den dargestellten Ausführungsbeispielen aus der ermittelten Frequenzverschiebung die Reflektorgeschwindigkeit und detektiert den Befüllvorgang durch einen Vergleich der Reflektorgeschwindigkeit mit einem festgelegten Geschwindigkeitsgrenzwert. Vorliegend ist der Geschwindigkeitsgrenzwert ein vor Inbetriebnahme des Füllstandmessgeräts 2 festgelegter Wert. Alternativ kann der Geschwindigkeitsgrenzwert aber auch abhängig von der maximalen Geschwindigkeit der Füllgutoberfläche und insofern abhängig vom Füllgut festgelegt werden. Durch die Detektion des Befüllvorgangs anhand der Geschwindigkeit des Reflektors 6 kann der Befüllvorgang selbst dann erkannt werden, wenn der Reflektor 6 einen geringen Abstand zur Füllgutoberfläche aufweist. Insofern kann der Befüllvorgang auf besonders zuverlässige Weise erkannt werden.

Zudem ermittelt die Auswerteinheit 8 vorliegend nach der Detektion des Befüllvorgangs die Laufzeit des Reflexionssignals 7 und bestimmt aus der ermittelten Laufzeit den Füllstand innerhalb des Behälters 10. Folglich kann mit dem dargestellten Verfahren 1 und dem Füllstandmessgerät 2 aus dem Reflexionssignal 7 sowohl eine Information über den Befüllstatus und/oder über die Anordnung des Füllstandmessgerätes 2 über dem Füllstrom 9 als auch über den Füllstand des Behälters 10 gewonnen werden. Das Verfahren 1 und das Füllstandmessgerät 2 sind insofern besonders einfach ausgestaltet.

Des Weiteren gibt die Auswerteeinheit 8 den detektierten Befüllstand und den Füllstandmesswert aus, wobei der Füllstandmesswert als unsicher gekennzeichnet wird, wenn die Auswerteeinheit 8 einen Befüllvorgang detektiert. Vorliegend ist eine Anzeigeeinheit 11 vorgesehen, über die der detektierte Befüllstatus und der Füllstandmesswert ausgegeben werden. Die Anzeigeeinheit 11 stellt die ihr übergebenen Werte für den Nutzer sichtbar dar. Alternativ kann eine entsprechende Anzeigeeinheit in der Auswerteeinheit integriert sein. Optional wird die Füllstandmessung unterbrochen, wenn ein Befüllvorgang detektiert wird. Die Ausgabe von fehlerhaften oder nicht gekennzeichneten unsicheren Messwerten wird dadurch vermieden.

Im Ergebnis sind ein Verfahren 1 und ein Füllstandmessgerät 2 dargestellt, welche durch die Erkennung und Berücksichtigung der dynamischen Störquelle des Befüllvorgangs bei der Füllstandmessung einen besonders hohen Grad an Zuverlässigkeit der ausgegeben Füllstandmesswerte aufweisen.

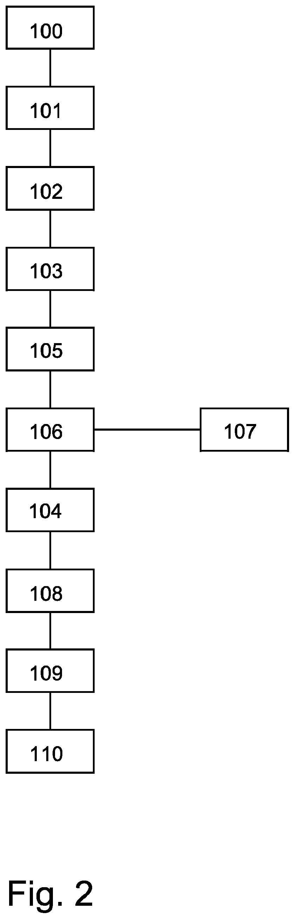

Fig. 2 zeigt ein zweites Ausführungsbeispiel eines erfindungsgemäßen Verfahrens zum Betreiben eines berührungslos arbeitenden Ultraschall-oder Radar-Füllstandmessgeräts mit wenigstens einem freistrahlenden Sender, wenigstens einem Empfänger und wenigstens einer Auswerteeinheit, welches besonders zuverlässige Füllstandmesswerte bereitstellt.

In einem ersten Schritt 100 sendet der Sender ein Sendesignal aus, welches an einem Reflektor reflektiert und anschließend durch den Empfänger empfangen wird 101. Das Sende- und/oder Reflexionssignal wird in einem nächsten Schritt ausgewertet 102, wobei eine Frequenzverschiebung zwischen dem Sendesignal und dem Reflexionssignal ermittelt wird 103, aus der wiederum die Reflektorgeschwindigkeit bestimmt wird 105.

Durch einen Vergleich 106 der Reflektorgeschwindigkeit mit einem Geschwindigkeitsgrenzwert, welcher abhängig von der maximalen Geschwindigkeit der Füllgutoberfläche festgelegt wird 107, wird der Befüllvorgang detektiert 104.

Das Verfahren nutzt in vorteilhafter Weise die Geschwindigkeitsinformation des Reflektors, um zu erkennen, ob ein Befüllstrom das Sendesignal durchläuft und dies insofern bei der weiteren Auswertung bzw. Ausgabe der Füllstandmessewerte zu berücksichtigen ist.

Nach der Detektion des Befüllstandes 104 wird in einem nächsten Schritt die Laufzeit des Reflexionssignals ermittelt 108 und aus der Laufzeit der Füllstand bestimmt. Anschließend werden der detektierte Befüllstand und der Füllstandmesswert ausgegeben 109, wobei der Füllstandmesswert als unsicher gekennzeichnet wird, wenn die Auswerteinheit einen Befüllvorgang detektiert. Im dargestellten Ausführungsbeispiel wird die Füllstandmessung unterbrochen 110, solange die Auswerteeinheit einen Befüllvorgang detektiert.

Durch die Berücksichtigung des Befüllstandes bei der Ausgabe des Füllstandmesswertes und insbesondere durch die Unterbrechung der Füllstandmessung, solange die Auswerteieinheit einen Befüllvorgang detektiert, wird die Ausgabe von nicht gekennzeichneten unsicheren bzw. fehlerhaften Füllstandmesswerten vermieden, so dass die nach diesem Verfahren ausgegebenen Messwerte eine besonders hohe Zuverlässigkeit aufweisen.

## Patentansprüche

1. Verfahren (1) zum Betreiben eines berührungslos arbeitenden Ultraschall- oder Radar-Füllstandmessgeräts (2) mit wenigstens einem freistrahlenden Sender (3), wenigstens einem Empfänger (5) und wenigstens einer Auswerteeinheit (8) umfassend die folgenden Schritte:
Aussenden (100) eines Sendesignals (4) durch den Sender (3),
Empfangen (101) eines an einem Reflektor (6) reflektierten Reflexionssignals (7) durch den Empfänger (5),
Auswerten (102) des Sendesignals (4) und/oder des Reflexionssignals (7) durch die Auswerteeinheit (8),
wobei die Auswerteeinheit (8) eine Frequenzverschiebung zwischen dem Sendesignal (4) und dem Reflexionssignal (7) ermittelt (103) und durch Auswertung der ermittelten Frequenzverschiebung oder einer von der ermittelten Frequenzverschiebung abgeleiteten Größe einen Befüllvorgang detektiert (104), bei dem ein Füllstrom (9) das Sendesignal (4) zumindest teilweise durchläuft,
**dadurch gekennzeichnet,**
**dass** die Auswerteeinheit (8) aus der ermittelten Frequenzverschiebung die Reflektorgeschwindigkeit bestimmt (105) und den Befüllvorgang durch einen Vergleich (106) der Reflektorgeschwindigkeit mit einem festgelegten Geschwindigkeitsgrenzwert detektiert, wobei durch den Vergleich mit einem Geschwindigkeitsgrenzwert erkannt wird, ob der Reflektor einem sich schnell bewegenden Füllstrom angehört.

2. Verfahren (1) nach Anspruch 1, **dadurch gekennzeichnet, dass** der Geschwindigkeitsgrenzwert abhängig von der maximalen Geschwindigkeit der Füllgutoberfläche festgelegt (107) wird.

3. Verfahren (1) nach einem der Ansprüche 1 oder 2, **dadurch gekennzeichnet, dass** die Auswerteeinheit (8) nach, vor oder während der Detektion des Befüllvorgangs die Laufzeit des Reflexionssignals (7) ermittelt (108) und aus der ermittelten Laufzeit den Füllstand bestimmt.

4. Verfahren (1) nach einem der Ansprüche 1 bis 3, **dadurch gekennzeichnet, dass** die Auswerteeinheit (8) den detektierten Befüllstand und den Füllstandmesswert ausgibt (109), wobei der Füllstandmesswert als unsicher gekennzeichnet wird, wenn die Auswerteeinheit (8) einen Befüllvorgang detektiert.

5. Verfahren nach einem der Ansprüche 1 bis 4, **dadurch gekennzeichnet, dass** die Füllstandsmessung unterbrochen wird (110), wenn die Auswerteeinheit (8) einen Befüllvorgang detektiert.

6. Berührungslos arbeitendes Ultraschall- oder Radar-Füllstandmessgerät (2) umfassend wenigstens einen freistrahlenden Sender (3) für die Aussendung eines Sendesignals (4), wenigstens einen Empfänger (5) für den Empfang eines an einem Reflektor (6) reflektierten Reflexionssignals (7) und wenigstens eine Auswerteeinheit (8) zur Auswertung des Sende- (4) und/oder Reflexionssignals (7) ausgestaltet ist,
wobei die Auswerteeinheit (8) im Betriebszustand dazu geeignet ist, eine Frequenzverschiebung zwischen dem Sendesignal (4) und dem Reflexionssignal (7) zu ermitteln und durch Auswertung der ermittelten Frequenzverschiebung oder einer von der ermittelten Frequenzverschiebung abgeleiteten Größe einen Befüllvorgang zu detektieren, bei dem ein Füllstrom (9) das Sendesignal (4) zumindest teilweise durchläuft,
**dadurch gekennzeichnet,**
**dass** die Auswerteeinheit (8) im Betriebszustand dazu geeignet ist, aus der ermittelten Frequenzverschiebung die Reflektorgeschwindigkeit zu bestimmen und den Befüllvorgang durch einen Vergleich der Reflektorgeschwindigkeit mit einem festgelegten Geschwindigkeitsgrenzwert zu detektieren, wobei durch den Vergleich mit einem Geschwindigkeitsgrenzwert erkannt wird, ob der Reflektor einem sich schnell bewegenden Füllstrom angehört.

7. Füllstandmessgerät (2) nach Anspruch 6, **dadurch gekennzeichnet, dass** die Auswerteeinheit (8) im Betriebszustand dazu geeignet ist, nach, vor oder während der Detektion des Befüllvorgangs die Laufzeit des Reflexionssignals (7) zu ermitteln und aus der ermittelten Laufzeit den Füllstand zu bestimmen.

8. Füllstandmessgerät (2) nach einem der Ansprüche 6 oder 7, **dadurch gekennzeichnet, dass** die Auswerteeinheit (8) im Betriebszustand dazu geeignet ist, den detektierten Befüllvorgang und den Füllstandmesswert auszugeben, wobei der Füllstandmesswert als unsicher gekennzeichnet wird, wenn die Auswerteeinheit (8) einen Befüllvorgang detektiert.

9. Füllstandmessgerät (2) nach einem der Ansprüche 6 bis 8, **dadurch gekennzeichnet, dass** die Auswerteeinheit (8) im Betriebszustand dazu geeignet ist, die Füllstandsmessung zu unterbrechen, wenn die Auswerteeinheit (8) einen Befüllvorgang detektiert.

## Claims

1. Method (1) for operating a contactless ultrasound or radar fill level measuring device (2) having at least one open distribution transmitter (3), at least one receiver (5) and at least one evaluation unit (8) comprising the following steps:
emitting (100) a transmitter signal (4) by the transmitter (3),
receiving (101) a reflection signal (7) reflected on a reflector (6) by the receiver (5),
evaluating (102) the transmitter signal (4) and/or the reflection signal (7) by the evaluation unit (8),
wherein the evaluation unit (8) identifies a frequency shift (103) between the transmitter signal (4) and the reflection signal (7) and, by evaluating the determined frequency shift or a variable derived from the determined frequency shift, detects a filling event (104), in which a filling stream (9) at least partially passes through the transmitter signal (4)
**characterized in**
**that** the evaluation unit (8) determines the reflector speed (105) from the identified frequency shift and detects the filling event by comparing (106) the reflector speed to a predetermined speed limit, wherein it is recognized whether the reflector belongs to a quickly moving filling current by comparison to a speed limit.

2. Method (1) according to claim 1, **characterized in that** the speed limit is specified (107) depending on the maximum speed of the fill product surface.

3. Method (1) according to any one of claims 1 or 2, **characterized in that** the evaluation unit (8) identifies (108) the transit time of the reflection signal (7) before, after or during detection of the filling event, and determines the fill level from the identified transit time.

4. Method (1) according to any one of claims 1 to 3, **characterized in that** the evaluation unit (8) outputs (109) the detected fill level and the measured fill level, wherein the measured fill level is characterized as unreliable when the evaluation unit (8) detects a filling event.

5. Method (1) according to any one of claims 1 to 4, **characterized in that** fill level measurement is interrupted (110) when the evaluation unit (8) detects a filling event.

6. Contactless ultrasound or radar fill level measuring device (2) comprising at least one open distribution transmitter (3) for emitting a transmitter signal (4), at least one receiver (5) for receiving a reflection signal (7) reflected on a reflector (6) and at least one evaluation unit (8) designed for evaluating the transmitter signal (4) and/or the reflection signal (7),
wherein in the operating state, the evaluation unit (8) is suitable for identifying a frequency shift between the transmitter signal (4) and the reflection signal (7) and for identifying a filling event by evaluating the identified frequency shift or a variable derived from the identified frequency shift, in which a filling stream (9) at least partially passes through the transmitter signal (4),
**characterized in**
**that**, in the operating state, the evaluation unit (8) is suitable for determining the reflector speed from the identified frequency shift and for detecting the filling event by comparing the reflector speed to a predetermined speed limit, wherein it is recognized whether the reflector belongs to a quickly moving filling current by comparison to a speed limit.

7. Fill level measuring device (2) according to claim 6, **characterized in that**, in the operating state, the evaluation unit (8) is suitable for identifying the transit time of the reflection signal (7), before, after or during detection of the filling event, and for determining the fill level from the transit time.

8. Fill level measuring device (2) according to any one of claims 6 or 7, **characterized in that**, in the operating state, the evaluation unit (8) is suitable for outputting the detected filling event and the measured fill level, wherein the measured fill level is characterized as unreliable when the evaluation unit (8) detects a filling event.

9. Fill level measuring device (2) according to any one of claims 6 to 8, **characterized in that**, in the operating state, the evaluation unit (8) is suitable for interrupting the fill level measurement when the evaluation unit (8) detects a filling event.

## Revendications

1. Procédé (1) pour faire fonctionner un mesureur de niveau (2) à ultrasons ou à radar fonctionnant sans contact, comprenant au moins un émetteur (3) à rayonnement libre, au moins un récepteur (5) et au moins une unité d'interprétation (8), comprenant les étapes suivantes :
émission (100) d'un signal d'émission (4) par l'émetteur (3),
réception (101), par le récepteur (5), d'un signal de réflexion (7) réfléchi sur un réflecteur (6),
interprétation (102) du signal d'émission (4) et/ou du signal de réflexion (7) par l'unité d'interprétation (8),
l'unité d'interprétation (8) identifiant (103) un décalage de fréquence entre le signal d'émission (4) et
le signal de réflexion (7) et, par l'interprétation du décalage de fréquence identifié ou d'une grandeur dérivée du décalage de fréquence identifié, détectant une opération de remplissage (104) lors de laquelle un courant de remplissage (9) traverse au moins partiellement le signal d'émission (4),
**caractérisé en ce**
**que** l'unité d'interprétation (8) détermine (105) la vitesse du réflecteur à partir du décalage de fréquence identifié et détecte l'opération de remplissage par une comparaison (106) de la vitesse du réflecteur à une valeur limite de vitesse spécifiée, la comparaison à une valeur limite de vitesse permettant de reconnaître si le réflecteur appartient à un courant de remplissage qui se déplace rapidement.

2. Procédé (1) selon la revendication 1, **caractérisé en ce que** la valeur limite de vitesse est spécifiée (107) en fonction de la vitesse maximale de la surface de la matière de remplissage.

3. Procédé (1) selon l'une des revendications 1 ou 2, **caractérisé en ce que** l'unité d'interprétation (8) identifie (108) le temps de propagation du signal de réflexion (7) avant ou pendant la détection de l'opération de remplissage et détermine le niveau de remplissage à partir du temps de propagation identifié.

4. Procédé (1) selon l'une des revendications 1 à 3, **caractérisé en ce que** l'unité d'interprétation (8) délivre (109) l'état de remplissage détecté et la valeur mesurée du niveau de remplissage, la valeur mesurée du niveau de remplissage étant identifiée comme incertaine lorsque l'unité d'interprétation (8) détecte une opération de remplissage.

5. Procédé selon l'une des revendications 1 à 4, **caractérisé en ce que** la mesure du niveau de remplissage est interrompue (110) lorsque l'unité d'interprétation (8) détecte une opération de remplissage.

6. Mesureur de niveau (2) à ultrasons ou à radar fonctionnant sans contact, comprenant au moins un émetteur (3) à rayonnement libre pour l'émission d'un signal d'émission (4), au moins un récepteur (5) pour la réception d'un signal de réflexion (7) réfléchi sur un réflecteur (6) et au moins une unité d'interprétation (8) configurée pour l'interprétation du signal d'émission (4) et/ou du signal de réflexion (7),
l'unité d'interprétation (8), à l'état de fonctionnement, étant adaptée pour identifier un décalage de fréquence entre le signal d'émission (4) et le signal de réflexion (7) et, par l'interprétation du décalage de fréquence identifié ou d'une grandeur dérivée du décalage de fréquence identifié, détecter une opération de remplissage lors de laquelle un courant de remplissage (9) traverse au moins partiellement le signal d'émission (4),
**caractérisé en ce**
**que** l'unité d'interprétation (8), à l'état de fonctionnement, est adaptée pour déterminer la vitesse du réflecteur à partir du décalage de fréquence identifié et pour détecter l'opération de remplissage par une comparaison de la vitesse du réflecteur à une valeur limite de vitesse spécifiée, la comparaison à une valeur limite de vitesse permettant de reconnaître si le réflecteur appartient à un courant de remplissage qui se déplace rapidement.

7. Mesureur de niveau (2) selon la revendication 6, **caractérisé en ce que** l'unité d'interprétation (8), à l'état de fonctionnement, est adaptée pour identifier le temps de propagation du signal de réflexion (7) avant ou pendant la détection de l'opération de remplissage et pour déterminer le niveau de remplissage à partir du temps de propagation identifié.

8. Mesureur de niveau (2) selon l'une des revendications 6 ou 7, **caractérisé en ce que** l'unité d'interprétation (8), à l'état de fonctionnement, est adaptée pour délivrer l'opération de remplissage détectée et la valeur mesurée du niveau de remplissage, la valeur mesurée du niveau de remplissage étant identifiée comme incertaine lorsque l'unité d'interprétation (8) détecte une opération de remplissage.

9. Mesureur de niveau (2) selon l'une des revendications 6 à 8, **caractérisé en ce que** l'unité d'interprétation (8), à l'état de fonctionnement, est adaptée pour interrompre la mesure du niveau de remplissage lorsque l'unité d'interprétation (8) détecte une opération de remplissage.
